# EUROPEAN PATENT APPLICATION

(11) **EP 4 712 224 A1**
(43) Date of publication of application: **18.03.2026**
(21) Application number: 25193738.9
(22) Date of filing: 04.08.2025
(51) Int. Cl.: H01M 50/147

(54) **CAP ASSEMBLY, SECONDARY BATTERY, AND METHOD FOR MANUFACTURING SECONDARY BATTERY**

(30) Priority: 11.09.2024 KR 20240124338
(71) Applicant: SAMSUNG SDI CO., LTD., Yongin-si, Gyeonggi-do 17084 (KR)
(72) Inventor: CHOI, Hwanjun, 17084 Yongin-si, Gyeonggi-do (KR); HAN, Daekyung, 17084 Yongin-si, Gyeonggi-do (KR); KIM, Seoyoung, 17084 Yongin-si, Gyeonggi-do (KR)
(74) Representative: Gulde & Partner

(57) **Abstract**

A cap assembly includes a terminal part to be electrically connected to an electrode plate of an electrode assembly, a laser-transmissive glass part arranged above an area at where a current collection member that electrically connects an electrode plate of the electrode assembly and the terminal part and the electrode assembly are combined, and a cap plate having a terminal opening with which the terminal part is combined and a glass opening with which the glass part is combined that is combined with a case that accommodates the electrode assembly.

## Description

### BACKGROUND

### 1. Field

Aspects of embodiments of the present disclosure relate to a cap assembly, a secondary battery, and a method for manufacturing a secondary battery.

### 2. Description of the Related Art

Different from primary batteries, which are not designed to be (re)charged, secondary batteries are designed to be discharged and recharged. Low-capacity secondary batteries are used in small, portable electronic devices, such as smart phones, feature phones, notebook computers, digital cameras, and camcorders, while large-capacity secondary batteries are widely used as power sources for driving motors, such as of hybrid vehicles or electric vehicles, and for power storage.

Generally, a secondary battery includes an electrode assembly including (or consisting of) a positive electrode and a negative electrode, a case accommodating the electrode assembly, a terminal part that is connected to the electrode assembly, and various parts that connect the terminal part and the electrode assembly. Such parts are combined in a way, such as by laser welding, that is susceptible to poor connection attributable to movement or non-flatness between the parts or a difference between the locations of the parts or to the occurrence of a gap between welding surfaces.

The above information disclosed in this Background section is for enhancement of understanding of the background of the present disclosure, and therefore, it may contain information that does not constitute related (or prior) art.

### SUMMARY

Embodiments of the present disclosure are directed to a cap assembly including glass capable of transmitting a laser, a secondary battery including the same, and a method for manufacturing the secondary battery.

However, aspects and features of the present disclosure are not limited to those described above, and other aspects and features not mentioned herein, will be clearly understood by those skilled in the art from the description of the present disclosure below.

A cap assembly, according to various aspects of the present disclosure, includes a terminal part to be electrically connected to an electrode plate of an electrode assembly, a light-(e.g., laser light)-transmissive glass part arranged above an area at where a current collection member that electrically connects the electrode plate of the electrode assembly and the terminal part and the electrode assembly are combined, and a cap plate having a terminal opening with which the terminal part is combined and a glass opening with which the glass part is combined and that is combined with a case that accommodates the electrode assembly.

In embodiments, the terminal part may have a welding groove to be combined with concave-convex parts formed in the current collection member.

In embodiments, the cap plate may include an upper cap plate having an upper glass opening at a portion with which the glass part is combined and a lower cap plate having a seating groove in which the glass part is seated and a lower glass opening at the portion with which the glass part is combined.

In embodiments, the cap assembly may further include gaskets respectively arranged at where the upper cap plate and the glass come into contact with each other and at where the lower cap plate and the glass come into contact with each other.

In embodiments, the upper cap plate and the lower cap plate of the cap plate may be combined by welding at where the upper cap plate and the lower cap plate come into contact with each other.

In embodiments, the cap assembly may further include an upper insulation part between the terminal part and the cap plate.

In embodiments, the cap assembly may further include an insulation plate between the cap plate and the current collection member.

A secondary battery, according to various aspects of the present disclosure, includes an electrode assembly, a case accommodating the electrode assembly, a cap assembly combined with the case, and a current collection member electrically connecting an electrode plate of the electrode assembly and a terminal part of the cap assembly. The cap assembly includes a terminal part electrically connected to the electrode plate of the electrode assembly, a light-(e.g., laser light)-transmissive glass part arranged above an area at where the current collection member and the electrode assembly are combined, and a cap plate having a terminal opening with which the terminal part is combined and a glass opening with which the glass part is combined.

A secondary battery, according to various aspects of the present disclosure, includes a current collection member for electrically connecting an electrode plate of an electrode assembly of the secondary battery and a terminal part of a cap assembly of the secondary battery with one another. The cap assembly includes a glass part arranged above an area at where the current collection member and the electrode assembly are combined. The cap assembly includes a cap plate having a terminal opening with which the terminal part is combined and a glass opening with which the glass part is combined. The glass part is substantially transparent to light, e.g., is configured to be laser-light-transmissive.

In embodiments, the electrode assembly and the current collection member may be welded by using a laser that passes through the glass part.

In embodiments, the current collection member may have concave-convex parts to be combined with the terminal part.

In embodiments, the terminal part may have a welding groove to be combined with the concave-convex parts of the current collection member.

In embodiments, the cap plate may include an upper cap plate having an upper glass opening with which the glass is combined, and a lower cap plate having a seating groove in which the glass part is seated and a lower glass opening with which the glass is combined.

In embodiments, the cap assembly may further include gaskets respectively arranged at where the upper cap plate and the glass come into contact with each other and at where the lower cap plate and the glass come into contact with each other.

In embodiments, the upper cap plate and lower cap plate of the cap plate may be combined by welding at where the upper cap plate and the lower cap plate come into contact with each other.

In embodiments, the cap assembly may further include an upper insulation part between the terminal part and the cap plate.

In embodiments, the cap assembly may further include an insulation plate between the cap plate and the current collection member.

A method for manufacturing a secondary battery, according to various aspects of the present disclosure, includes manufacturing a cap assembly that is combined with a case that accommodates an electrode assembly, combining the cap assembly and a current collection member by combining the current collection member with a terminal part of the cap assembly, electrically connecting an electrode plate of the electrode assembly and the terminal part of the cap assembly by combining the current collection member and the electrode assembly, accommodating the electrode assembly in the case, and combining the cap assembly and the case. The manufacturing of the cap assembly includes manufacturing a cap plate having a terminal opening with which the terminal part is combined and a glass opening with which a light-(e.g., laser light)-transmissive glass part is combined and that is combined with the case, combining the terminal part that is electrically connected to the electrode plate of the electrode assembly with the terminal opening, and combining the glass part arranged above an area at where the current collection member and the electrode assembly are combined with the glass opening.

In embodiments, the electrically connecting of the electrode plate of the electrode assembly and the terminal part of the cap assembly may include combining the electrode assembly and the current collection member by welding the electrode assembly and the current collection member by using a laser that passes through the glass.

In embodiments, the combining of the cap assembly and the current collection member may include welding concave-convex parts in the current collection member and the terminal part through a welding groove in the terminal part.

In embodiments, the combining of the glass part with the glass opening may include seating the glass in a seating groove in a lower cap plate of the cap plate, disposing an upper cap plate of the cap plate over the lower cap plate, and combining the upper cap plate and the lower cap plate by welding an area at where the upper cap plate and the lower cap plate come into contact with each other.

According to various aspects of the present disclosure, product reliability and mass productivity can be improved by reducing or minimizing the risk of poor adhesion between the current collection member and the cap assembly because the current collection plate and the electrode assembly are combined by radiating a laser through the glass part of the cap assembly after the cap assembly including the laser-transmissive glass part and the current collection member have been combined.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure and provide further understanding of the technical spirit of the present disclosure along with the aforementioned contents of the disclosure. Accordingly, the present disclosure should not be construed as being limited to contents described in the drawings, in which:
FIG. 1A is an upper perspective view of a prismatic secondary battery according to the related art.
FIG. 1B is a cross-sectional view taken along the line I-I' in FIG. 1A;
FIG. 2A is a perspective view of a side-terminal secondary battery according to the related art.
FIG. 2B is a cross-sectional view of a terminal part of the side-terminal secondary battery shown in FIG. 2A.
FIG. 2C is an exploded perspective view of the terminal part of the side-terminal secondary battery shown in FIG. 2A.
FIG. 2D is an exploded cross-sectional view of the terminal part of the side-terminal secondary battery shown in FIG. 2A.
FIG. 3A is a diagram illustrating a cap assembly according to embodiments of the present disclosure.
FIG. 3B is a cross-sectional view of a glass being combined to the cap assembly according to embodiments of the present disclosure.
FIG. 4A is a perspective view illustrating a cap assembly and a current collection member being combined according to embodiments of the present disclosure.
FIG. 4B is a lateral view illustrating the cap assembly and the current collection member being combined according to embodiments of the present disclosure.
FIG. 5A is a perspective view illustrating the electrode assembly being combined with the current collection member after the cap assembly and the current collection member have been combined according to embodiments of the present disclosure.
FIG. 5B is a lateral view illustrating the electrode assembly being combined with the current collection member after the cap assembly and the current collection member have been combined according to embodiments of the present disclosure.
FIG. 6 is a perspective view illustrating the cap assembly being combined with a case after the cap assembly, a current collection member, and an electrode assembly have been combined according to embodiments of the present disclosure.

### DETAILED DESCRIPTION

Embodiments of the present disclosure will be described below, in detail, with reference to the accompanying drawings. Prior to the description, it is noted that the terms or words used in this specification and claims should not be construed as being limited their common or dictionary meanings but should be understood to have meanings and concepts in agreement with the spirit of the present disclosure based on the principle that an inventor can define the concept of each term suitably in order to describe his/her own invention in the best way possible. The embodiments described in this specification and the configurations illustrated in the drawings are examples of the present disclosure and do not cover all the technical ideas of the present disclosure. Accordingly, it should be understood that various changes and modifications may be made at the time of filing this application.

It will be further understood that the terms "comprises/includes" and/or "comprising/including" when used herein, specify the presence of stated features, integers, steps, operations, elements, components, and/or groups thereof, but do not preclude the presence or addition of one or more other features, integers, steps, operations, elements, components, and/or groups thereof.

To facilitate understanding of the present disclosure, the accompanying drawings may not be drawn to scale and the dimensions of some components may be exaggerated. It should be noted that the same reference numerals designate the same components in different embodiments.

Reference to two compared elements, features, etc. as being "the same" means that they are "substantially the same". Therefore, the phrase "substantially the same" may include a deviation that is considered low in the art, for example, a deviation of about 5% or less. The uniformity of any parameter in a given region may mean that it is uniform from an average perspective.

Although the terms such as "first" and/or "second" are used to describe various components, these components are not limited by these terms, of course. These terms are only used to distinguish one component from another component. Thus, unless specifically stated to the contrary, a first component may be termed a second component without departing from the teachings of exemplary embodiments.

Throughout the specification, unless otherwise stated, each element may be singular or plural.

Arrangement of any component "above (or below)" or "on (or under)" a component may mean that any component is disposed in contact with the upper (or lower) surface of the component, as well as that other components may be interposed between the element and any element disposed on (or under) the element.

It will be understood that, when a component is referred to as being "connected", "coupled", or "joined" to another component, not only can it be directly "connected", "coupled", or "joined" to the other element, but also can it be indirectly "connected", "coupled", or "joined" to the other element with other elements interposed therebetween.

As used herein, the term "and/or" includes any and all combinations of one or more of the associate listed items. The use of "may" when describing embodiments of the present disclosure relates to "one or more embodiments of the present disclosure". Expressions such as "at least one" and "one or more" preceding a list of elements modify the entire list of elements and do not modify the individual elements in the list.

Throughout the specification, when "A and/or B" is stated, it means A, B, or A and B, unless otherwise stated. In addition, when "C to D" is stated, it means C or more and D or less, unless specifically stated to the contrary.

When the phrase such as "at least one of A, B, and C", "at least one of A, B, or C", "at least one selected from the group of A, B, and C", or "at least one selected from among A, B, and C" is used to designate a list of elements A, B, and C, the phrase may refer to any and all suitable combinations.

The term "use" may be considered synonymous with the term "utilize". As used herein, the terms "substantially," "about," and similar terms are used as terms of approximation rather than as terms of degree, and are intended to account for inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Accordingly, a first element, component, region, layer, or section discussed below may be termed a second element, component, region, layer, or section without departing from the teachings of exemplary embodiments.

For ease of explanation in describing the relationship of one element or feature to another element(s) or feature(s) as illustrated in the drawings, spatially relative terms such as "beneath", "below", "lower", "above", and "upper" may be used herein. It will be understood that spatially relative positions are intended to encompass different directions of the device in use or operation in addition to the direction depicted in the drawings. For example, if the device in the drawings is turned over, any element described as being "below" or "beneath" another element would then be oriented "above" or "over" another element. Therefore, the term "below" may encompass both upward and downward directions.

The terminology used herein is for the purpose of describing embodiments of the present disclosure and is not intended to limit the present disclosure.

The present disclosure will be described, in detail, with reference to the attached drawings.

Examples of secondary batteries include a coin type, a cylindrical type, a prismatic type, and a pouch type. The present disclosure is generally applicable to a prismatic secondary battery. Therefore, the prismatic secondary battery will first be briefly described prior to description of embodiments of the present disclosure. However, aspects and features of the present disclosure may be applicable to other types of secondary batteries.

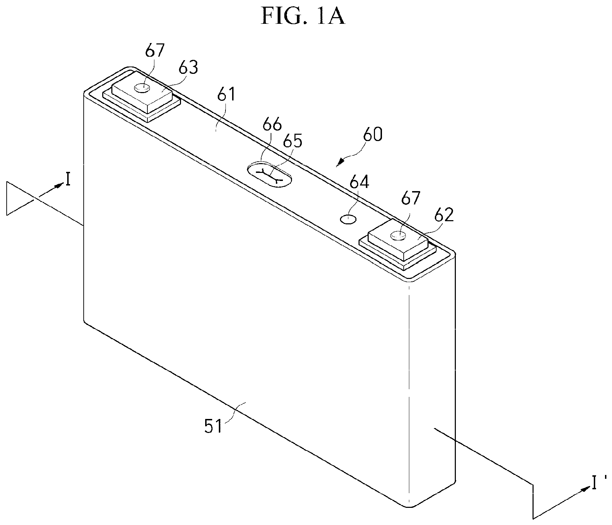

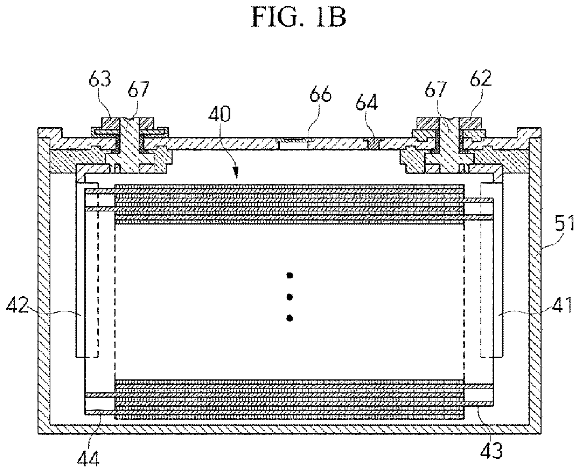

FIG. 1A is a top perspective view of a prismatic secondary battery according to the related art, and FIG. 1B is a cross-sectional view taken along the line I-I' in FIG. 1A.

First, the external appearance of the prismatic secondary battery illustrated in FIG. 1A will be described.

A case 51 defines an overall appearance of the prismatic secondary battery and may be made of conductive metal, such as aluminum, aluminum alloy, or nickel-plated steel. The case 51 may provide (or may form) a space for accommodating an electrode assembly therein.

A cap assembly 60 may include a cap plate 61 that covers an opening in the case 51, and the cap assembly 60 and the cap plate 61 may be made of a conductive material. A first terminal 62 and a second terminal 63 may be electrically connected to positive and negative (or negative and positive) electrodes, respectively, inside the case 51 and may be installed to protrude outwardly through the cap plate 61.

The cap plate 61 may have an electrolyte injection port 64 formed to have a sealing plug inserted therein and a vent 66 having a notch 65. The vent 66 is configured to degas the secondary battery, for example, to discharge excess gas generated inside the secondary battery.

With reference to FIG. 1B, the internal structure of the prismatic secondary battery and the coupling structure with the cap assembly 60 will be described.

As illustrated in FIG. 1B, the prismatic secondary battery may generally include an electrode assembly 40, a first current collector part 41, a first terminal 62, a second current collector part 42, a second terminal 63.

The electrode assembly 40 may be formed by winding or stacking a laminate of a first electrode plate, a separator, and a second electrode plate, each of which are in the form of a plate or a film. When the electrode assembly 40 is a wound laminate, it may have a winding axis parallel to a longitudinal direction of the case 51. The electrode assembly 40 may be of a stack type rather than a winding type, but the shape of the electrode assembly 40 is not limited in the present disclosure. In addition, the electrode assembly 40 may be a Z-stack electrode assembly in which a first electrode plate and a second electrode plate are inserted into both sides (e.g., opposite sides) of a separator, which is then bent (or folded) into a Z-stack. Furthermore, the electrode assembly 40 may include (or may consist of) one or more electrode assemblies, which are stacked such that their long sides are adjacent to each other and accommodated in the case 51, and the number of electrode assemblies is not limited in the present disclosure. The electrode assembly 40 may have a first electrode plate that acts as a negative electrode and a second electrode plate that acts as a positive electrode, or vice versa.

The first electrode plate may be formed by applying a first electrode active material, such as graphite or carbon, to a first electrode current collector plate made of a metal foil, such as copper, copper alloy, nickel, or nickel alloy. The first electrode plate may include a first electrode tab (e.g., a first uncoated part) 43, which is a region without application of the first electrode active material. The first electrode tab 43 may act as a current flow passage between the first electrode plate and the first current collector part 41. In some aspects, the first electrode tab 43 may be formed by cutting the first electrode plate to protrude to one side in advance when manufacturing the first electrode plate and may protrude farther to one side than the separator without separate cutting.

The second electrode plate may be formed by applying a second electrode active material, such as transition metal oxide, to a substrate made of a metal foil, such as aluminum or aluminum alloy. The second electrode plate may include a second electrode tab (e.g., a second uncoated part) 44, which is a region without application of the second electrode active material. The second electrode tab 44 may act as a current flow passage between the second electrode plate and the second current collector part 42. In some aspects, the second electrode tab 44 may be formed by cutting the second electrode plate to protrude to the other side in advance when manufacturing the second electrode plate and may protrude farther to the other side than the separator without separate cutting.

In some aspects, the first electrode tab 43 may be located on the right end side of the electrode assembly 40, and the second electrode tab 44 may be located on the left end side of the electrode assembly 40. Alternatively, the first electrode tab 43 and the second electrode tab 44 may be located on one end side (e.g., the same end side) of the electrode assembly 40 in the same direction. Here, left and the right are represented based on the secondary battery as oriented in FIG. 1B for convenience of explanation, and they may change in position when the secondary battery is rotated left and right or up and down.

The separator prevents a short circuit between the first electrode plate and the second electrode plate while permitting migration of lithium ions therebetween. The separator may be made of, for example, a polyethylene film, a polypropylene film, a polyethylene-polypropylene film, or the like.

The first electrode tab 43 of the first electrode plate and the second electrode tab 44 of the second electrode plate extend from both ends (e.g., opposite ends) of the electrode assembly 40 as described above, respectively. In some aspects, the electrode assembly 40 may be accommodated together with an electrolyte in the case 51.

In the electrode assembly 40, the first current collector part 41 and the second current collector part 42 may be welded and connected to the first electrode tab 43 extending from the first electrode plate and the second electrode tab 44 extending from the second electrode plate, respectively.

The first current collector part 41 and the second current collector part 42 are connected to the first terminal 62 and the second terminal 63, as described with reference to FIG. 1A, through terminal pins 67, respectively. In some aspects, the terminal pins 67 may each have an outer peripheral surface that is threaded and may be fastened to the first terminal 62 and the second terminal 63 by screwing. However, the present disclosure is not limited thereto. For example, the terminal pins 67 may also be coupled to the first terminal 62 and the second terminal 63 by riveting or welding.

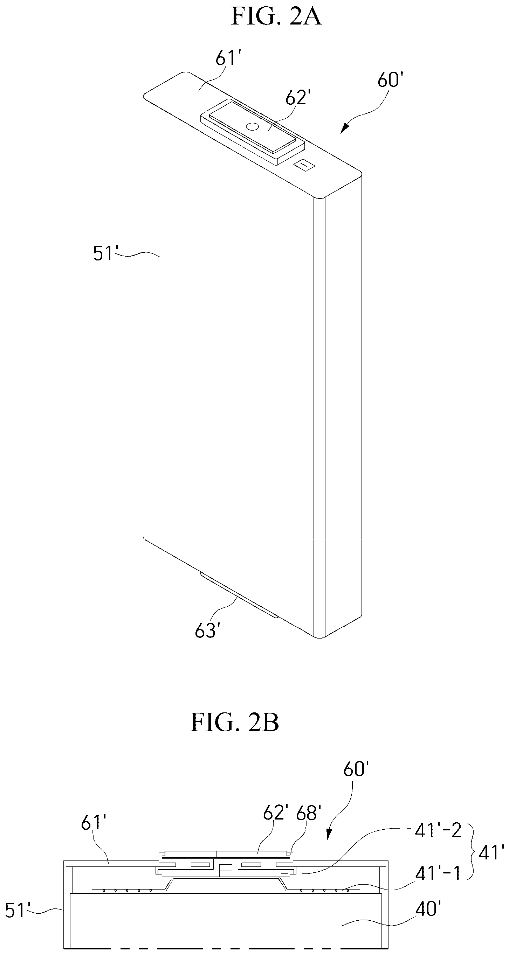

The secondary battery illustrated in FIGS. 1A and 1B may have a top-terminal structure because the first terminal 62 and second terminal 63 of the electrode assembly 40 are disposed at a top of the case 51. Different from the secondary battery illustrated in FIGS. 1A and 1B, the first terminal and the second terminal may be disposed on both sides (e.g., opposite sides) of the case. Such a structure may be called a side-terminal structure. A secondary battery having such a side-terminal structure is described below with reference to FIGS. 2A-2D.

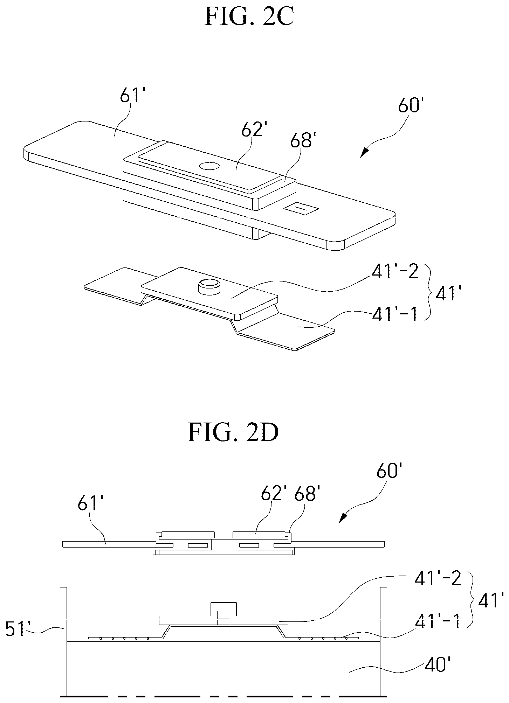

FIG. 2A is a perspective view of a side-terminal secondary battery according to the related art, and FIG. 2B is a cross-sectional view of a terminal part of the side-terminal secondary battery shown in FIG. 2A. FIG. 2C is an exploded perspective view of the terminal part of the side-terminal secondary battery shown in FIG. 2A, and FIG. 2D is an exploded cross-sectional view of the terminal part of the side-terminal secondary battery shown in FIG. 2A.

Referring to FIG. 2A, the side-terminal secondary battery may be a secondary battery having a form in which a first terminal 62' and a second terminal 63' are disposed on both sides (e.g., opposite sides or opposite ends) of a case 51'. The first and second terminals 62' and 63' may be disposed on both sides of the case 51'. The arrangement of an electrode assembly and an electrode tab within the case 51' may be similar to that of the secondary battery illustrated in FIGS. 1A and 1B.

Referring to FIGS. 2B and 2C, the terminal part of the side-terminal secondary battery may be formed to have a direct-combined structure because the first terminal part 62' is directly connected to a current collection member 41' in which concave-convex parts are formed without using the terminal pin as shown in FIG. 1B. The current collection member 41' may include a current collection plate 41'-1 that is electrically connected to the electrode assembly 40' and a current collector 41'-2 having the concave-convex parts. In such an embodiment, a welding groove may be formed in the first terminal part 62'. The first terminal part 62' and the current collection member 41' may be combined by welding at the welding groove in the first terminal part 62' and the concave-convex parts of the current collector 41'-2 by radiating a laser to the welding groove and the concave-convex parts. Furthermore, an insulating member 68' may be provided between the cap plate 61' and the first terminal part 62'.

As illustrated in FIG. 2D, in the direct-combined structure according to the related art, the welding method may be as follows. The current collection member 41' may be first combined with the electrode assembly 40'. The electrode assembly 40' may be accommodated in the case 51'. Furthermore, when the cap assembly 60' has been disposed in the opening in the case 51', the first terminal part 62' and the current collection member 41' may be combined by welding at the welding groove of the first terminal part 62' and the concave-convex parts of the current collector 41'-2 by radiating a laser to portions at where the welding groove and the concave-convex parts come into contact with each other. Thereafter, the manufacturing of the secondary battery may be completed by welding and combining the cap assembly 60' and the case 51'.

As described above, in the direct-combined structure according to the related art, the combination of the first terminal part 62' and the current collection member 41' is performed in the state in which it is difficult to maintain the adhesion (or contact) state between the first terminal part 62' and the current collection member 41'. Accordingly, a poor connection attributable to the flatness (or non-flatness) of the current collector 41'-2 or a difference between the locations of parts due to movement of the concave-convex parts of the current collector 41'-2 may occur. Accordingly, the direct-combined structure according to the related art may have a problem in that bad adhesion attributable to a gap between welding surfaces occurs.

Accordingly, aspects of the present disclosure that overcome these problems in the direct-combined structure according to the related art are described below with reference to the drawings. Aspects of the present disclosure, some of which are described below with reference to the drawings, are described in connection with a secondary battery having a side-terminal structure as an example, but the present disclosure is not limited thereto. Aspects of the present disclosure may also be used in a secondary battery having a top-terminal structure.

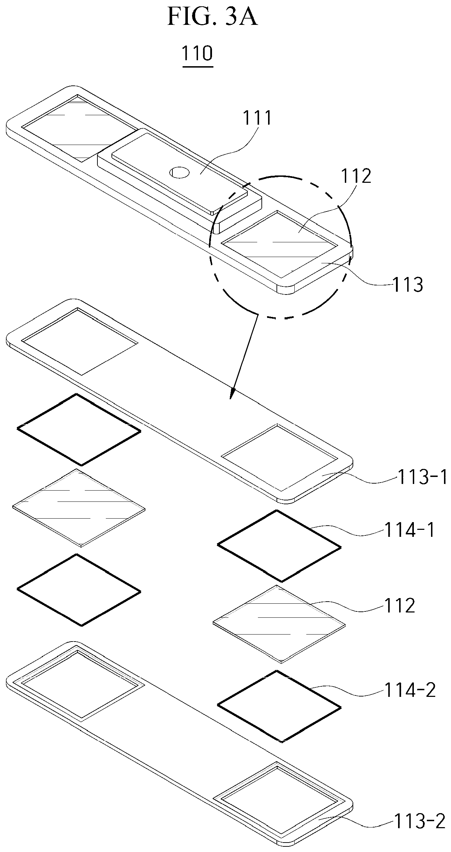

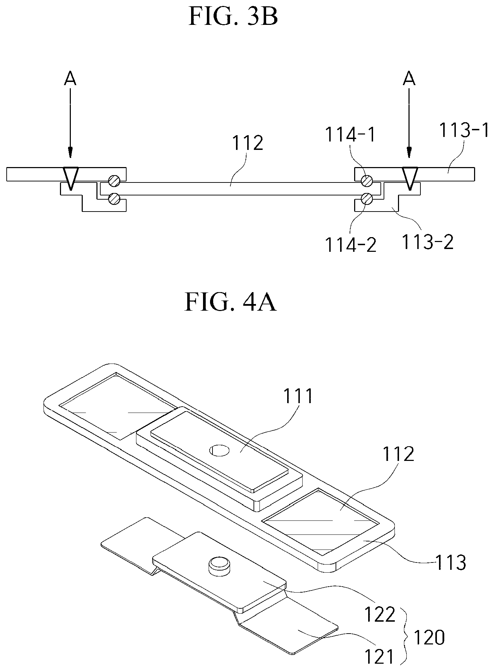

FIG. 3A is a diagram illustrating a cap assembly according to various embodiments of the present disclosure, and FIG. 3B is a cross-sectional view of a part with which the glass of the cap assembly is combined according to various embodiments of the present disclosure.

Referring to FIG. 3A, a cap assembly 110, according to various embodiments of the present disclosure, may include a terminal part 111, glass (e.g., a glass part) 112, and a cap plate 113.

The terminal part 111 may be electrically connected to an electrode plate of an electrode assembly. The terminal part 111 may have positive or negative polarity and may have in some aspects the same structure as that illustrated in FIGS. 2A and 2B, although the terminal part 111 has any polarity. In various embodiments, the terminal part 111 may be a terminal plate. The terminal part 111 may electrically connect the outside (e.g., an external device or circuit) and a secondary battery by using a conductive material. The terminal part 111 may have an approximately plate shape and may be disposed in parallel to the top of the electrode assembly. In various embodiments, a welding groove to be combined with concave-convex parts formed in a current collection member may be formed in the terminal part 111.

The glass 112 may be provided on a portion in which the current collection member that electrically connects the electrode plate of the electrode assembly and the terminal part 111 and the electrode assembly are combined. The glass 112 may be made of a material capable of transmitting a laser beam (e.g., the glass may be light transmissive). A laser beam may be radiated to the portion in which the current collection member and the electrode assembly are combined through the glass 112 because the glass 112 can transmit a laser beam.

A terminal hole (e.g., a terminal opening) with which the terminal part 111 is combined and a glass hole (e.g., a glass opening) with which the glass 112 is combined may be formed in the cap plate 113. The cap plate 113 may be combined with a case that accommodates the electrode assembly. The cap plate 113 may have an approximately rectangular plate shape and may be made of the same material as the case. In some aspects, the cap plate 113 may have a size corresponding to the inner side (e.g., to the inside) of the opening in the case. Furthermore, in some embodiments, the cap plate 113 may be combined with the case, e.g., by laser welding. The terminal hole and a groove or an immersion hole for being combined with the terminal part 111 may be formed in the cap plate 113.

In some aspects illustrated in FIGS. 3A and 3B, the cap plate 113 may include an upper cap plate 113-1 in which an upper glass hole has been formed at a portion with which the glass 112 has been (or is to be) combined, and a lower cap plate 113-2 in which a seating groove in which the glass 112 is (or is to be) seated and a lower glass hole have been formed at a portion with which the glass 112 is combined. In this embodiment, the cap plate 113 may include gaskets 114-1 and 114-2 provided in a portion at where the upper cap plate 113-1 and the glass 112 come into contact with each other and a portion at where the lower cap plate 113-2 and the glass 112 come into contact with each other. When vibration or an impact is applied to the portions with which the cap plate 113 and the glass 112 are combined, the gaskets 114-1 and 114-2 may prevent the glass 112 from being damaged. Furthermore, as illustrated in FIG. 3B, the upper cap plate 113-1 and lower cap plate 113-2 of the cap plate 113 may be combined by welding a portion A at where the upper cap plate 113-1 and the lower cap plate 113-2 come into contact with each other. In such an embodiment, the welding method may be a laser welding method.

A structure of the secondary battery including the cap assembly 110 and a method for manufacturing the secondary battery are sequentially described below with reference to FIGS. 4A to 6.

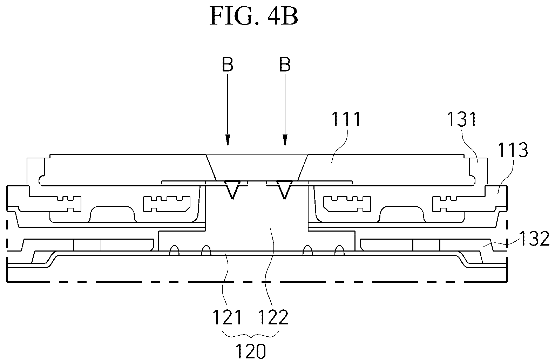

FIG. 4A is a perspective view illustrating the cap assembly and a current collection member being combined according to various embodiments of the present disclosure. FIG. 4B is a lateral view illustrating the cap assembly and the current collection member being combined according to various embodiments of the present disclosure.

Referring to FIGS. 4A and 4B, to manufacture the secondary battery including the cap assembly 110, first, the cap assembly 110, according to various embodiments of the present disclosure, may be manufactured. The cap assembly 110, according to various embodiments of the present disclosure, may be manufactured by using the following process. After the cap plate 113 in which the terminal hole with which the terminal part 111 is combined and the glass hole with which the glass 112 is combined is manufactured, the terminal part 111 that is electrically connected to the electrode plate of the electrode assembly may be combined with the terminal hole. The glass 112 capable of transmitting a laser, which is provided to be disposed on a portion in which the current collection member and the electrode assembly are combined, may be combined with the glass hole.

In various embodiments, the process of combining the glass 112 with the glass hole may be as follows. After the glass 112 is seated in the seating groove formed in the lower cap plate 113-2 of the cap plate 113 and the upper cap plate 113-1 of the cap plate 113 is disposed over the lower cap plate 113-2, the upper cap plate 113-1 and the lower cap plate 113-2 may be combined by welding the portion in which the upper cap plate 113-1 and the lower cap plate 113-2 come into contact with each other.

When the cap assembly 110, according to various embodiments of the present disclosure, is manufactured, the cap assembly 110 and the current collection member 120 according to various embodiments of the present disclosure may be combined with one another (e.g., attached to one another, e.g., connected to one another by welding). Concave-convex parts to be combined with the terminal part 111 may be formed in the current collection member 120. In various embodiments, the current collection member 120 may include a current collection plate 121 that is electrically connected to the electrode assembly and a current collector 122 in which the concave-convex parts have been formed. Furthermore, a welding groove to be combined with the concave-convex parts formed in the current collection member 120 may be formed in the terminal part 111. In such aspects, as illustrated in FIG. 4B, the terminal part 111 and the current collection member 120 may be combined by welding the welding groove of the terminal part 111 and the concave-convex parts of the current collector 122 by radiating a laser to a portion B at where the welding groove of the terminal part 111 and the concave-convex parts of the current collector 122 come into contact with each other. As described above, the cap assembly 110, according to various embodiments of the present disclosure, can improve product reliability and mass productivity by reducing or minimizing the risk of poor adhesion between the current collection member 120 and the cap assembly 110 because the welding is performed in the adhesion state in which the welding groove of the terminal part 111 and the concave-convex parts of the current collector 122 have been certainly (or are confirmed to have been) brought into contact with each other.

In various embodiments, the cap assembly 110 may include an upper insulation part 131 that is disposed between the terminal part 111 and the cap plate 113. The upper insulation part 131 may have a rectangular plate shape corresponding to a shape of the terminal part 111. The upper insulation part 131 may be formed to be larger than the terminal part 111 and may have a groove in which the terminal part 111 is seated.

Furthermore, in various embodiments, the cap assembly 110 may include an insulation plate 132 that is disposed between the cap plate 113 and the current collection member 120. The insulation plate 132 may have an approximately rectangular plate shape. The insulation plate 132 may be closely attached to the bottom of the cap plate 113 and may insulate the cap plate 113 and the electrode assembly from each other. A plate surface or side of the insulation plate 132 may have a different shape depending on shapes of parts to be insulated. A through hole (e.g., an opening) corresponding to the locations of the terminal hole in the cap plate 113 and the glass hole may be formed in the insulation plate 132. A part of the current collection plate 121 may be disposed under the insulation plate 132.

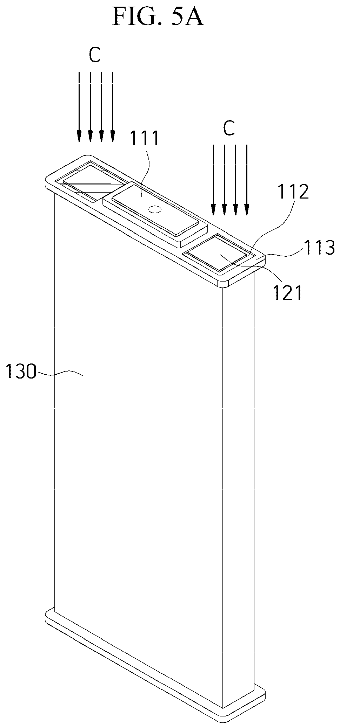

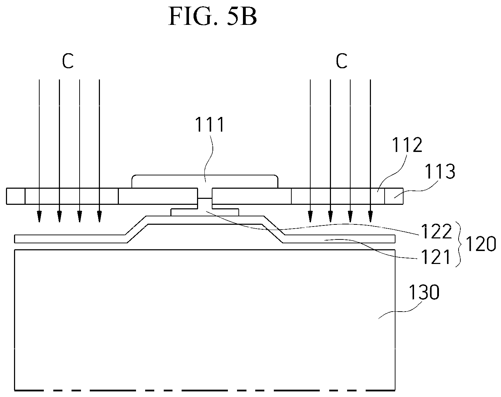

FIG. 5A is a perspective view illustrating the electrode assembly being combined with the current collection member after the cap assembly and the current collection member have been combined according to various embodiments of the present disclosure. FIG. 5B is a lateral view illustrating the electrode assembly being combined with the current collection member after the cap assembly and the current collection member have been combined according to various embodiments of the present disclosure.

Referring to FIGS. 5A and 5B, after the cap assembly 110 and the current collection member 120 are combined as described above with reference to FIGS. 4A and 4B, the electrode assembly 130 may be combined with the current collection member 120 after the cap assembly 110 and the current collection member 120 have been combined. In various embodiments, the electrode assembly 130 and the current collection member 120 may be welded and combined by using a laser beam that passes through the glass 112. As illustrated in FIGS. 5A and 5B, in the state in which the cap assembly 110 and the current collection member 120 have been combined, when the combined cap assembly 110 and current collection member 120 are disposed on the electrode assembly 130, the current collection plate 121, that is, a part of the current collection member 120, may be exposed through (e.g., may be visible through) the glass 112. The current collection plate 121 and the electrode assembly 130 may be welded and combined by radiating laser light to portions C exposed through the glass 112.

As described above, in the direct-combined structure according to the related art, after the electrode assembly and the current collection member are combined, the current collection member and the terminal part are combined in the state in which maintaining adhesion between the current collection member and the terminal part is difficult. Accordingly, there is a risk of a poor connection attributable to the flatness of the current collection member or a difference between the locations of parts or bad adhesion attributable to the occurrence of a gap between welding surfaces. However, in the direct-combined structure using the cap assembly 110 according to various embodiments of the present disclosure, after the current collection member 120 and the terminal part 111 are combined while the adhesion state between the current collection member 120 and the terminal part 111 is maintained, the electrode assembly 130 and the current collection member 120 are combined by laser welding through the glass 112. Accordingly, product reliability and mass productivity can be improved because the risk of poor adhesion between the current collection member 120 and the cap assembly 110 is reduced or minimized.

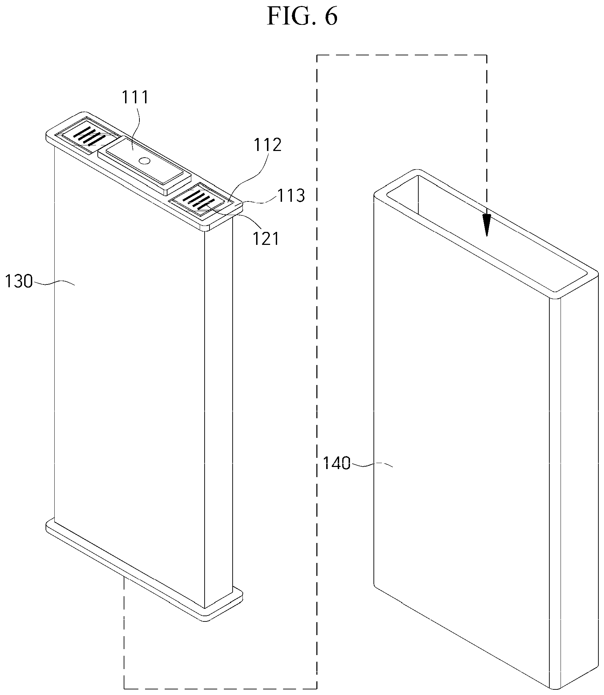

FIG. 6 is a perspective view illustrating the cap assembly being combined with a case after the cap assembly, the current collection member, and the electrode assembly have been combined according to various embodiments of the present disclosure.

Referring to FIG. 6, after the cap assembly 110, the current collection member 120, and the electrode assembly 130, according to various embodiments of the present disclosure, are combined as described herein, the cap assembly 110, the current collection member 120, and the electrode assembly 130 may be accommodated in a case 140 in the state in which the cap assembly 110, the current collection member 120, and the electrode assembly 130 have been combined. Thereafter, when the cap assembly 110 and the case 140 are combined, the secondary battery, according to various embodiments of the present disclosure, may be manufactured. The cap assembly 110 and the case 140 may be combined by using laser welding.

Hereinafter, materials which may be used in a secondary battery according to an embodiment of the present disclosure are described.

A compound (e.g., a lithiated intercalation compound) capable of reversible intercalation and deintercalation of lithium may be used as a positive electrode active material. For example, one type or more selected from among complex oxides of metal, selected from among cobalt, manganese, nickel, and a combination of them, and lithium may be used as the positive electrode active material.

The complex oxide may be lithium transition metal complex oxide. A detailed example of the complex oxide may include lithium nickel-based oxide, lithium cobalt-based oxide, lithium manganese-based oxide, a lithium ferrous phosphate-based compound, cobalt-free nickel-manganese-based oxide, or a combination of them.

For example, a compound that is represented as one of the following chemical formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the chemical formula, A may be Ni, Co, Mn, or a combination of them. X may be Al, Ni, Co, Mn, Cr, Fe, Mg, Sr, V, a rare earth element, or a combination of them; D may be O, F, S, P, or a combination of them. G may be Al, Cr, Mn, Fe, Mg, La, Ce, Sr, V, or a combination of them. L¹ may be Mn, Al, or a combination of them.

A positive electrode for a lithium secondary battery may include a current collector and a positive electrode active material layer formed on the current collector. The positive electrode active material layer may include the positive electrode active material and may further include a binder and/or a conductive material.

Content of the positive electrode active material may be in a range of about 90 wt.% to about 99.5 wt.% with respect to the positive electrode active material layer 100 wt.%. Content of the binder and the conductive material may be in a range of about 0.5 wt.% to about 5 wt.% with respect to the positive electrode active material layer 100 wt.%.

Al may be used as the current collector, but the present disclosure is not limited thereto.

A negative electrode active material may include a material capable of reversibly Intercalation/de-intercalation with respect to lithium ions, lithium metal, an alloy of lithium metal, a material capable of doping and dedoping with respect to lithium, or transition metal oxide.

The material capable of reversibly Intercalation/de-intercalation with respect to lithium ions may include a carbon-based negative electrode active material, for example, crystalline carbon, amorphous carbon, or a combination of them. An example of the crystalline carbon may include graphite, such as natural graphite or synthetic graphite. Examples of the amorphous carbon may include soft or hard carbon, mesophase pitch carbide, and fired coke.

An Si-based negative electrode active material or an Sn-based negative electrode active material may be used as the material capable of doping and dedoping with respect to lithium. The Si-based negative electrode active material may be silicon, a silicon-carbon composite, SiOₓ (0<x<2), a Si-based alloy, or a combination of them.

The silicon-carbon composite may be a composite of silicon and amorphous carbon. According to an implementation example, the silicon-carbon composite may include silicon particles and may have a form in which amorphous carbon has been coated on surfaces of silicon particles.

The silicon-carbon composite may further include crystalline carbon. For example, the silicon-carbon composite may include a core including crystalline carbon and silicon particles, and an amorphous carbon coating layer disposed on a surface of the core.

A negative electrode for a lithium secondary battery may include a current collector and a negative electrode active material layer disposed on the current collector. The negative electrode active material layer may include the negative electrode active material and may further include a binder and/or a conductive material.

For example, the negative electrode active material layer may include the negative electrode active material in a range of about 90 wt.% to about 99 wt.%, the binder in a range of about 0.5 wt.% to about 5 wt.%, and the conductive material in a range of about 0 wt.% to about 5 wt.%.

A nonaqueous-based binder, an aqueous-based binder, a dry binder, or a combination of them may be used as the binder. If the aqueous-based binder is used as a binder for the negative electrode, the binder for the negative electrode may further include a cellulose-series compound capable of assigning viscosity.

One selected from among nickel foil, stainless steel foil, titanium foil, nickel foam, copper foam, a polymer base on which a conductive metal has been coated, and a combination of them may be used as a current collector for the negative electrode.

An electrolyte for a lithium secondary battery may include a nonaqueous organic solvent and lithium salts.

The nonaqueous organic solvent may act as a medium through which ions that are involved in an electrochemical reaction of a battery can move.

The nonaqueous organic solvent may be a carbonate-based, ester-based, ether-based, ketone-based, or alcohol-based solvent, an aprotic solvent, or a combination of them. The carbonate-based, ester-based, ether-based, ketone-based, or alcohol-based solvent, or the aprotic solvent may be used solely, or two types or more of them may be mixed and used as the nonaqueous organic solvent.

Furthermore, if the carbonate-based solvent is used, annular carbonate and chain carbonate may be mixed and used.

A separator may be present between the positive electrode and the negative electrode depending on the type of lithium secondary battery. Polyethylene, polypropylene, and polyvinylidene fluoride, or a multi-layer having two or more layers of them may be used as the separator.

The separator may include a porous base, and a coating layer including an organic matter, an inorganic matter, or a combination of them that is disposed on one or both sides of the porous base.

The organic matter may include a polyvinylidene fluoride-based heavy antibody or (meth)acrylic polymer.

The inorganic matter may include inorganic particles selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination of them, but the present disclosure is not limited thereto.

The organic matter and the inorganic matter may have a form in which the organic matter and the inorganic matter have been mixed in one coating layer or a form in which a coating layer including the organic matter and a coating layer including the inorganic matter have been stacked.

Example 1 is a cap assembly including, a terminal part configured to be electrically connected to an electrode plate of an electrode assembly; a laser-transmissive glass part above where a current collection member that electrically connects the electrode plate of the electrode assembly and the terminal part and the electrode assembly are combined; and a cap plate having a terminal opening with which the terminal part is combined and a glass opening with which the glass part is combined and that is combined with a case that accommodates the electrode assembly.

In Example 2, the cap assembly of Example 1 may optionally further include a welding groove to be combined with concave-convex parts formed in the current collection member is formed in the terminal part.

In Example 3, the cap assembly of Example 1 or 2 may optionally further include that the cap plate includes: an upper cap plate in which an upper glass opening is formed at a portion at where the glass part is combined; and a lower cap plate in which a seating groove in which the glass part is seated and a lower glass opening are formed at the portion with which the glass part is combined.

In Example 4, the cap assembly of any one of Examples 1 to 3 may optionally further include gaskets respectively arranged at where the upper cap plate and the glass part come into contact with each other and at where the lower cap plate and the glass part come into contact with each other.

In Example 5, the cap assembly of Examples 3 or 4 may optionally further include that the upper cap plate and the lower cap plate of the cap plate are combined by welding a portion an area at where the upper cap plate and the lower cap plate come into contact with each other.

In Example 6, the cap assembly of any one of Examples 1 to 5 may optionally further include an upper insulation part between the terminal part and the cap plate.

In Example 7, the cap assembly of any one of Examples 1 to 6 may optionally further include an insulation plate between the cap plate and the current collection member.

In various aspects, the cap assembly includes the terminal part, the laser-light-transmissive glass part, and the cap plate. The cap assembly may include other components. Furthermore, the cap assembly may be configured in various aspects to fit and/or functionally interact with other components of a secondary battery, such as an electrode assembly, a case, a current collection member, for example.

Example 8 is a secondary battery including: an electrode assembly; a case accommodating the electrode assembly; a cap assembly combined with the case; and a current collection member electrically connecting an electrode plate of the electrode assembly and a terminal part of the cap assembly. The cap assembly includes a terminal part electrically connected to the electrode plate of the electrode assembly; a laser-transmissive glass part above an area where the current collection member and the electrode assembly are combined; and a cap plate having a terminal opening with which the terminal part is combined and a glass opening with which the glass part is combined, the cap plate being combined with the case.

In various aspects, the configurations of the cap assembly as described in Examples 1 to 7 allow for a combination of the cap assembly with one or more other parts of the secondary battery.

In Example 9, the secondary battery of Example 8 may optionally further include that the electrode assembly and the current collection member are welded by a laser that passes through the glass part.

In Example 10, the secondary battery of Example 8 or 9 may optionally further include that the current collection member has concave-convex parts to be combined with the terminal part.

In Example 11, the secondary battery of Example 10 may optionally further include that the terminal part has a welding groove to be combined with the concave-convex parts in the current collection member.

In Example 12, the secondary battery of any one of Examples 8 to 11 may optionally further include that the cap plate includes: an upper cap plate having an upper glass opening at where which the glass part is combined; and a lower cap plate having seating groove at where the glass part is seated and a lower glass opening at where the glass is combined.

In Example 13, the secondary battery of Example 12 may optionally further include that the cap assembly further includes gaskets respectively arranged at where the upper cap plate and the glass part come into contact with each other and at where the lower cap plate and the glass part come into contact with each other.

In Example 14, the secondary battery of Example 13 or 14 may optionally further include that the upper cap plate and the lower cap plate of the cap plate are combined by welding an area where the upper cap plate and the lower cap plate come into contact with each other.

In Example 15, the secondary battery of any one of Examples 8 to 14 may optionally further include that the cap assembly further includes an upper insulation part between the terminal part and the cap plate.

In Example 16, the secondary battery of any one of Examples 8 to 15 may optionally further include that the cap assembly further includes an insulation plate between the cap plate and the current collection member.

Example 17 is a method for manufacturing a secondary battery, the method including: manufacturing a cap assembly that is combined with a case that accommodates an electrode assembly; combining the cap assembly and a current collection member by combining the current collection member with a terminal part of the cap assembly; electrically connecting an electrode plate of the electrode assembly and the terminal part of the cap assembly by combining the current collection member and the electrode assembly; accommodating the electrode assembly in the case; and combining the cap assembly and the case, wherein the manufacturing of the cap assembly includes: manufacturing a cap plate having a terminal opening with which the terminal part is combined and a glass opening with which a laser-transmissive glass part is combined; combining the terminal part that is electrically connected to the electrode plate of the electrode assembly with the terminal opening; and combining the glass part with the glass opening at where the current collection member and the electrode assembly are combined.

In various aspects, the secondary battery manufactured in accordance with the method of Example 17 may be configured as described with reference to any one of Examples 8 to 16. In various aspects, the cap assembly manufactured in accordance with the method of Example 17 may be configured as described with reference to any one of Examples 1 to 7. In such aspects, the method may be configured such that one or more manufacturing steps (such as forming, combining, as for example) may be configured to cause the respectively desired configuration for the cap assembly and/or the secondary battery.

In Example 18, the method of Example 17 may optionally further include that the electrically connecting of the electrode plate of the electrode assembly and the terminal part of the cap assembly includes combining the electrode assembly and the current collection member by welding the electrode assembly and the current collection member by using a laser that passes through the glass part.

In Example 19, the method of Example 17 or 18 may optionally further include that the combining of the cap assembly and the current collection member includes welding concave-convex parts of the current collection member and the terminal part through a welding groove in the terminal part.

In Example 20, the method of Example 19 may optionally further include that the combining of the glass part with the glass opening includes: seating the glass part in a seating groove in a lower cap plate of the cap plate; disposing an upper cap plate of the cap plate over the lower cap plate; and combining the upper cap plate and the lower cap plate by welding at where the upper cap plate and the lower cap plate come into contact with each other.

In some aspects, a light (e.g., laser-light) transmissive glass may have transmission rate for the respectively used light of a laser (or in general of visible light, or in general of infrared light) that is greater than 33% (e.g., greater than 50%, e.g., greater than 70%) such that transmission dominates over reflection and/or absorption. In some aspects, a light (e.g., laser-light) transmissive glass - as described herein-may include an optical transparent glass (e.g., a silicon dioxide based glass) for example.

Although the present disclosure has been described above in connection with some embodiments thereof, the present disclosure is not limited to the embodiments described herein. A person having ordinary knowledge in the art to which the present disclosure pertains may modify and change the present disclosure within the technical spirit of the present disclosure and the equivalent range of the following claims.

### Description of Some Reference Symbols

| | | | |
|---|---|---|---|
| 110: | cap assembly | 111: | terminal part |
| 112: | glass | 113: | cap plate |
| 113-1: | upper cap plate | 113-2: | lower cap plate |
| 114-1, 114-2: | gasket | 120: | current collection member |
| 121: | current collection plate | | |
| 122: | current collector | | |
| 130: | electrode assembly | 131: | upper insulation part |
| 132: | insulation plate | 140: | case |

## Claims

1. A cap assembly (110) comprising,
a terminal part (111) configured to be electrically connected to an electrode plate of an electrode assembly (130);
a light-transmissive glass (112) part configured to be positioned above where a current collection member (120) that electrically connects the electrode plate of the electrode assembly (130) and the terminal part (111) and the electrode assembly (130) are to be combined; and
a cap plate (113) having a terminal opening with which the terminal part (111) is combined and a glass opening with which the light-transmissive glass (112) part is combined and that is configured to be combined with a case (140) that accommodates the electrode assembly (130).

2. The cap assembly (110) as claimed in claim 1, wherein the terminal part (111) comprises a welding groove configured to be combined with concave-convex parts formed in the current collection member (120).

3. The cap assembly (110) as claimed in claim 1 or 2, wherein the cap plate (113) comprises:
an upper cap plate (113-1) in which an upper glass opening is formed at a portion at where the light-transmissive glass (112) part is combined; and
a lower cap plate (113-2) in which a seating groove in which the light-transmissive glass (112) part is seated and a lower glass opening are formed at the portion with which the light-transmissive glass (112) part is combined.

4. The cap assembly (110) as claimed in claim 3, further comprising gaskets (114-1, 114-2) respectively arranged at where the upper cap plate (113-1) and the light-transmissive glass (112) part come into contact with each other and at where the lower cap plate (113-2) and the light-transmissive glass (112) part come into contact with each other.

5. The cap assembly (110) as claimed in claim 3 or 4, wherein the upper cap plate (113-1) and the lower cap plate (113-2) of the cap plate (113) are combined by welding a portion an area at where the upper cap plate (113-1) and the lower cap plate (113-2) come into contact with each other.

6. The cap assembly (110) as claimed in any one of claims 1 to 5, further comprising an upper insulation part (131) between the terminal part (111) and the cap plate (113).

7. The cap assembly (110) as claimed in any one of claims 1 to 6, further comprising an insulation plate (132) configured to be disposed between the cap plate (113) and the current collection member (120).

8. A secondary battery comprising:
an electrode assembly (130);
a case (140) accommodating the electrode assembly (130);
a cap assembly (110) configured in accordance with any one of claims 1 to 7 and combined with the case (140); and
a current collection member (120) electrically connecting an electrode plate of the electrode assembly (130) and a terminal part (111) of the cap assembly (110).

9. The secondary battery as claimed in claim 8, wherein the light-transmissive glass (112) part of the cap assembly (110) is disposed above an area where the current collection member (120) and the electrode assembly (130) are combined and wherein the electrode assembly (130) and the current collection member (120) are welded by a laser that passes laser light through the light-transmissive glass (112) part.

10. The secondary battery as claimed in claim 8 or 9, wherein the current collection member (120) has concave-convex parts to be combined with the terminal part (111) of the cap assembly (110).

11. The secondary battery as claimed in any one of claims 8 to 10, wherein an insulation plate (132) of the cap assembly (110) is disposed between the cap plate (113) of the cap assembly (110) and the current collection member (120).

12. A method for manufacturing a secondary battery, the method comprising:
manufacturing a cap assembly (110) that is combined with a case (140) that accommodates an electrode assembly (130);
combining the cap assembly (110) and a current collection member (120) by combining the current collection member (120) with a terminal part (111) of the cap assembly (110);
electrically connecting an electrode plate of the electrode assembly (130) and the terminal part (111) of the cap assembly (110) by combining the current collection member (120) and the electrode assembly (130);
accommodating the electrode assembly (130) in the case (140); and
combining the cap assembly (110) and the case (140),
wherein the manufacturing of the cap assembly (110) comprises:
manufacturing a cap plate (113) having a terminal opening with which the terminal part (111) is combined and a glass opening with which a light-transmissive glass (112) part is combined;
combining the terminal part (111) that is electrically connected to the electrode plate of the electrode assembly (130) with the terminal opening; and
combining the light-transmissive glass glass (112) part with the glass opening at where the current collection member (120) and the electrode assembly (130) are combined.

13. The method as claimed in claim 12, wherein the electrically connecting of the electrode plate of the electrode assembly (130) and the terminal part (111) of the cap assembly (110) comprises combining the electrode assembly (130) and the current collection member (120) by welding the electrode assembly (130) and the current collection member (120) by using a laser beam that passes through the light-transmissive glass (112) part.

14. The method as claimed in claim 12 or 13, wherein the combining of the cap assembly (110) and the current collection member (120) comprises welding concave-convex parts of the current collection member (120) and the terminal part (111) through a welding groove in the terminal part (111).

15. The method as claimed in any one of claims 12 to 14, wherein the combining of the light-transmissive glass (112) part with the glass opening comprises:
seating the light-transmissive glass (112) part in a seating groove in a lower cap plate (113-2) of the cap plate (113);
disposing an upper cap plate (113-1) of the cap plate (113) over the lower cap plate (113-2); and
combining the upper cap plate (113-1) and the lower cap plate (113-2) by welding at where the upper cap plate (113-1) and the lower cap plate (113-2) come into contact with each other.
